(19) Europäisches Patentamt
European Patent Office
Office européen des brevets

(11) EP 4 477 713 A1

(12) EUROPEAN PATENT APPLICATION
published in accordance with Art. 153(4) EPC

(43) Date of publication:
**18.12.2024 Bulletin 2024/51**

(21) Application number: **22927614.2**

(22) Date of filing: **07.10.2022**

(51) International Patent Classification (IPC):
***C08L 83/07*** (2006.01) ***C08J 5/18*** (2006.01)
***C08K 3/22*** (2006.01) ***C08K 3/28*** (2006.01)
***C08K 9/04*** (2006.01) ***C08L 83/05*** (2006.01)

(52) Cooperative Patent Classification (CPC):
**C08J 5/18; C08K 3/22; C08K 3/28; C08K 9/04; C08L 83/04**

(86) International application number:
**PCT/JP2022/037639**

(87) International publication number:
**WO 2023/162323 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.02.2022 JP 2022025596**

(71) Applicant: **Fuji Polymer Industries Co., Ltd.**
**Nagoya-shi, Aichi 450-0002 (JP)**

(72) Inventor: **SUZUMURA, Katsuyuki**
**Nagoya-shi, Aichi 463-0026 (JP)**

(74) Representative: **Dehns**
**10 Old Bailey**
**London EC4M 7NG (GB)**

(54) **THERMALLY CONDUCTIVE COMPOSITION, THERMALLY CONDUCTIVE SHEET, AND METHOD FOR MANUFACTURING SAME**

(57) Provided is a thermally conductive composition that contains a curable polyorganosiloxane (A) and a thermally conductive inorganic filler (B). An amount of the thermally conductive inorganic filler (B) is 500 to 5000 parts by mass with respect to 100 parts by mass of the curable polyorganosiloxane (A). The thermally conductive inorganic filler (B) contains spherical alumina (B1) with an average particle size of 1 μm or more and less than 10 μm and crushed alumina (B2) with an average particle size of 0.01 μm or more and less than 1 μm. Aproportion of the spherical alumina (B1) is more than 0 part by mass and 1500 parts by mass or less and a proportion of the crushed alumina (B2) is more than 0 part by mass and 1000 parts by mass or less with respect to 100 parts by mass of the curable polyorganosiloxane (A).

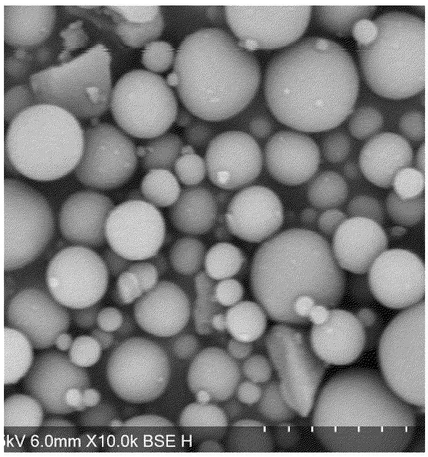


FIG. 2

EP 4 477 713 A1

## Description

### Technical Field

The present invention relates to a thermally conductive composition, a thermally conductive sheet, and a method for producing the thermally conductive sheet.

### Background Art

With the significant improvement in the performance of semiconductor devices such as CPUs in recent years, the amount of heat generated by them has become extremely large. For this reason, heat dissipators are attached to electronic components that may generate heat, and a thermally conductive sheet is used to improve the adhesion between the heat dissipators and heat generating members such as semiconductor devices. Moreover, a thermally conductive sheet with a high thermal conductivity, a low steady-state load value, and flexibility has been increasingly demanded as recent devices become smaller in size and higher in performance. Patent Document 1 proposes a thermally conductive silicone composition with a viscosity of 800 Pa s or less at 23°C before curing, thereby improving, e.g., compressibility, insulation properties, and thermal conductive properties. Patent Document 2 proposes the use of a thermally conductive filler with a specific average particle size to improve adhesion properties and conformability to electronic components. Patent Document 3 proposes a thermally conductive sheet having an uneven surface to increase flexibility, which improves conformability to electronic components. In Patent Document 4, the present applicant proposes a thermally conductive sheet with a low steady-state load value by using a matrix resin that can have a low polymer viscosity after a crosslinking reaction.

### Prior Art Documents

#### Patent Documents

Patent Document 1: JP 2013-147600 A
Patent Document 2: JP 2003-253136 A
Patent Document 3: JP 2001-217360 A
Patent Document 4: WO 2020/179115 A1

### Disclosure of Invention

#### Problem to be Solved by the Invention

However, the conventional thermally conductive compositions still need to be improved further because their compounds (mixed materials) before curing have high viscosity and are difficult to mold, and their thermally conductive sheets after curing have high steady-state load values.

To solve the above conventional problems, the present invention provides a thermally conductive composition that improves moldability due to the reduced viscosity of the compound (mixture) before curing, and that achieves a low steady-state load value when cured into a thermally conductive sheet. The present invention also provides such a thermally conductive sheet and a method for producing the thermally conductive sheet.

#### Means for Solving Problem

A thermally conductive composition of the present invention contains a curable polyorganosiloxane (A) and a thermally conductive inorganic filler (B). An amount of the thermally conductive inorganic filler (B) is 500 to 5000 parts by mass with respect to 100 parts by mass of the curable polyorganosiloxane (A). The thermally conductive inorganic filler (B) contains spherical alumina (B1) with an average particle size of 1 μm or more and less than 10 μm and crushed alumina (B2) with an average particle size of 0.01 μm or more and less than 1 μm. A proportion of the spherical alumina (B1) is more than 0 part by mass and 1500 parts by mass or less and a proportion of the crushed alumina (B2) is more than 0 part by mass and 1000 parts by mass or less with respect to 100 parts by mass of the curable polyorganosiloxane (A).

A thermally conductive sheet of the present invention includes the thermally conductive composition that has been molded into a sheet and cured

A method for producing a thermally conductive sheet of the present invention includes molding a compound of the

thermally conductive composition into a sheet, and heating and curing the sheet-shaped compound

Effects of the Invention

The thermally conductive composition of the present invention contains a curable polyorganosiloxane (A) and a thermally conductive inorganic filler (B). The amount of the thermally conductive inorganic filler (B) is 500 to 5000 parts by mass with respect to 100 parts by mass of the curable polyorganosiloxane (A). The thermally conductive inorganic filler (B) contains spherical alumina (B1) with an average particle size of 1 μm or more and less than 10 μm and crushed alumina (B2) with an average particle size of 0.01 μm or more and less than 1 μm. The proportion of the spherical alumina (B1) is more than 0 part by mass and 1500 parts by mass or less and the proportion of the crushed alumina (B2) is more than 0 part by mass and 1000 parts by mass or less with respect to 100 parts by mass of the curable polyorganosiloxane (A). This configuration can provide a thermally conductive composition that improves moldability due to the reduced viscosity of the compound (mixed material) before curing, and that achieves low instantaneous and steady-state load values when cured into a thermally conductive sheet. This configuration can also provide such a thermally conductive sheet and a method for producing the thermally conductive sheet.

Brief Description of Drawings

[FIG. 1] FIG. 1 is a schematic cross-sectional view illustrating a method for using a thermally conductive sheet in an embodiment of the present invention.
[FIG. 2] FIG. 2 is a scanning electron microscope (SEM) image (10,000X magnification) of spherical alumina (B1) in an embodiment of the present invention.
[FIG. 3] FIG. 3 is a scanning electron microscope (SEM) image of polygonal or roundish alumina that is not contained in the spherical alumina (B1) of the present invention.
[FIG. 4] FIG. 4 is a schematically cross-sectional side view of a compressive load measuring device used in an example of the present invention.
[FIG. 5] FIGS. 5A to 5B are diagrams illustrating a method for measuring a thermal conductivity used in an example of the present invention.

Description of the Invention

The present invention relates to a thermally conductive composition that contains a curable polyorganosiloxane (A) and a thermally conductive inorganic filler (B). The curable polyorganosiloxane (A) is composed of a base polymer, a crosslinking component, and a catalyst component, and is preferably an addition curable silicone polymer. The thermally conductive composition preferably contains, e.g., the following.

(A1) Base polymer: a linear organopolysiloxane having an average of two or more alkenyl groups per molecule that are bonded to silicon atoms at both ends of a molecular chain.
(A2) Crosslinking component: an organohydrogenpolysiloxane having an average of two or more hydrogen atoms per molecule that are bonded to silicon atoms, in which the number of moles of the organohydrogenpolysiloxane is 0.1 mole or more and less than 3 moles with respect to 1 mole of the silicon-bonded alkenyl groups contained in the component A1.
(B) Thermally conductive inorganic filler (B): the amount of the thermally conductive inorganic filler (B) is 500 to 5000 parts by mass, preferably 500 to 4000 parts by mass, and more preferably 500 to 3000 parts by mass with respect to 100 parts by mass of the curable polyorganosiloxane (A). This allows the thermally conductive sheet to have a thermal conductivity of 2.0 W/m·K or more and to be suitable as a TIM (thermal interface material).
(C) Catalyst component: the catalyst component is present in an amount of 0.01 to 1000 ppm, expressed as weight of metal atoms, with respect to the component A1 andis preferably a platinum-based catalyst.

The thermally conductive inorganic filler (B) contains spherical alumina (B1) with an average particle size of 1 μm or more and less than 10 μm and crushed alumina (B2) with an average particle size of 0.01 pm or more and less than 1 μm. The proportion of the spherical alumina (B1) with an average particle size of 1 μm or more and less than 10 μm is more than 0 part by mass and 1500 parts by mass or less, preferably more than 0 part by mass and 1000 parts by mass or less, and more preferably more than 0 part by mass and 800 parts by mass or less with respect to 100 parts by mass of the curable polyorganosiloxane (A). This configuration can provide a thermally conductive composition that improves moldability due to the reduced viscosity of the compound (mixed material) before curing, and that achieves low instantaneous and steady-state load values when cured into a thermally conductive sheet, and can also provide a thermally conductive sheet that is formed from the thermally conductive composition. The thermally conductive inorganic filler (B) preferably does not contain non-spherical (crushed) alumina with an average particle size of 1 μm or more and less than 10 μm. In the specification of the present application, the "spherical alumina" means spherical alumina produced by a melting method

The proportion of the crushed alumina (B2) with an average particle size of 0.01 μm or more and less than 1 μm is more than 0 part by mass and 1000 parts by mass or less, preferably more than 0 part by mass and 800 parts by mass or less, and more preferably more than 0 part by mass and 700 parts by mass or less with respect to 100 parts by mass of the curable polyorganosiloxane (A).

The thermally conductive inorganic filler (B) further contains spherical alumina (B3) with an average particle size of 10 μm or more and 150 μm or less in a proportion of preferably more than 0 part by mass and 3500 parts by mass or less, more preferably more than 0 part by mass and 3000 parts by mass or less, and further preferably more than 0 part by mass and 2000 parts by mass or less. This configuration can provide a thermally conductive composition that improves moldability due to the further reduced viscosity of the compound (mixed material) before curing, and that achieves low instantaneous and steady-state load values when cured into a thermally conductive sheet, and can also provide such a thermally conductive sheet.

The thermally conductive inorganic filler (B) further contains crushed aluminum nitride (B4) with an average particle size of 10 μm or more and 100 μm or less in a proportion of preferably more than 0 part by mass and 500 parts by mass or less, more preferably more than 0 part by mass and 300 parts by mass or less, and further preferably more than 0 part by mass and 150 parts by mass or less. This configuration can provide a thermally conductive composition that improves moldability due to the further reduced viscosity of the compound (mixed material) before curing, and that achieves low instantaneous and steady-state load values when cured into a thermally conductive sheet, and can also provide such a thermally conductive sheet.

The thermally conductive composition may contain an additional thermally conductive inorganic filler other than the thermally conductive inorganic filler described above. Examples of the additional thermally conductive inorganic filler include boron nitride, zinc oxide, magnesium oxide, aluminum hydroxide, silicon carbide, and silica. These materials may be used alone or in combination of two or more. The additional thermally conductive inorganic filler has an average particle size of preferably 10 to 150 μm and may be in any form, including crushed, spherical, roundish, and needle-like. The additional thermally conductive inorganic filler may be added in an amount of 0 to 3000 parts by mass with respect to 100 parts by mass of the curable polyorganosiloxane (A).

The thermally conductive inorganic filler may be surface treated with a silane compound, a titanate compound, an aluminate compound, or partial hydrolysates thereof. This can prevent the deactivation of a curing catalyst or a crosslinking agent and improve the storage stability.

The thermally conductive composition is moldedinto a sheet and cured, resulting in a thermally conductive sheet of the present invention. The thermally conductive sheet is very versatile and suitable as a TIM (thermal interface material). The thickness of the thermally conductive sheet is preferably 0.2 to 10 mm.

The thermally conductive silicone sheet of the present invention has an instantaneous load value of preferably 300 N or less, more preferably 1 to 270 N, and further preferably 1 to 250 N when the thermally conductive silicone sheet with a diameter of 28.6 mm and an initial thickness of 2 mm is compressed by 50%, which is determined by a compressive load measuring method in accordance with ASTM D575-91: 2012. Moreover, the thermally conductive silicone sheet has a steady-state load value of preferably 80 N or less, more preferably 1 to 80 N, and further preferably 1 to 50 N when the thermally conductive silicone sheet with a diameter of 28.6 mm and an initial thickness of 2 mm is compressed by 50%, which is determined by a compressive load measuring method in accordance with ASTM D575-91: 2012.

In the present invention, the curable polyorganosiloxane (A) is also referred to as a silicone polymer, and has good properties such as high heat resistance and flexibility that are suitable for a material of a heat dissipating sheet. The silicone polymer may be, e.g., an addition curable silicone polymer, a peroxide curable silicone polymer, or a condensation silicone polymer. Among them, the addition curable silicone polymer is preferred.

The thermally conductive sheet of the present invention is preferably produced by molding the compound containing the curable polyorganosiloxane (A) and the thermally conductive inorganic filler (B) and having the following composition into a sheet, and crosslinking the sheet-shaped compound. The curable polyorganosiloxane (A) is composed of a base polymer, a crosslinking component, and a catalyst component.

(A1) Base polymer: a linear organopolysiloxane having an average of two or more alkenyl groups per molecule that are bonded to silicon atoms at both ends of a molecular chain.

(A2) Crosslinking component: an organohydrogenpolysiloxane having an average of two or more hydrogen atoms per molecule that are bonded to silicon atoms, in which the number of moles of the organohydrogenpolysiloxane is 0.1 mole or more and less than 3 moles with respect to 1 mole of the silicon-bonded alkenyl groups contained in the component A1.

(B) Thermally conductive inorganic filler: the amount of the thermally conductive inorganic filler is 500 to 5000 parts by

mass, preferably 500 to 4000 parts by mass, and more preferably 500 to 3000 parts by mass with respect to 100 parts by mass of the curable polyorganosiloxane (A). This allows the thermally conductive sheet to have a thermal conductivity of 2.0 W/m-K or more.

(C) Catalyst component: the catalyst component is present in an amount of 0.01 to 1000 ppm, expressed as weight of metal atoms, with respect to the component A1 andis preferably a platinum-based catalyst.

A method for producing a thermally conductive sheet of the present invention includes vacuum defoaming the compound of the thermally conductive composition, rolling and molding the defoamed compoundinto a sheet, and then heating and curing the sheet-shaped compound. The sheet-shaped thermally conductive composition is heated and cured, thereby forming a thermally conductive sheet. In the vacuum defoaming, the thermally conductive composition (compound) is defoamed under a pressure of e.g., - 0.08 to - 0.1 MPa for about 5 to 10 minutes. The compound may be rolled, e.g., by rotating rolls or by pressing. In this case, the rolling process with rotating rolls is preferred because it enables continuous production. In the rolling process, e.g., the compound is sandwiched between two synthetic resin films and then rolled between two rolls. The heating and curing of the sheet-shaped compoundis preferably performed at 90 to 120°C for 5 to 180 minutes. In the specification of the present application, curing is an equivalent term to crosslinking.

Hereinafter, each component will be described.

(1) Base polymer (component A1)

The base polymer is an organopolysiloxane having two or more silicon-bonded alkenyl groups per molecule. The organopolysiloxane having two or more alkenyl groups is the main agent of the thermally conductive composition of the present invention. In this case, the organopolysiloxane has two or more silicon-bonded alkenyl groups per molecule, and each alkenyl group has 2 to 8 carbon atoms, and preferably 2 to 6 carbon atoms and can be, e.g., a vinyl group or an allyl group. The viscosity of the base polymer is preferably 10 to 100,000 mPa·s, and particularly 100 to 10,000 mPa s at 25°C in terms of workability and curability.

Specifically, the base polymer is, e.g., an organopolysiloxane represented by the following general formula (Chemical Formula 1). This organopolysiloxane has an average of two or more alkenyl groups per molecule that are bonded to silicon atoms at both ends of the molecular chain. The organopolysiloxane is a linear organopolysiloxane whose side chains are capped with alkyl groups. The viscosity of the base polymer is preferably 10 to 100,000 mPa·s at 25°C in terms of workability and curability. Moreover, the linear organopolysiloxane may include a small amount of branched structure (trifiinctional siloxane units) in the molecular chain.

[Chemical Formula 1]

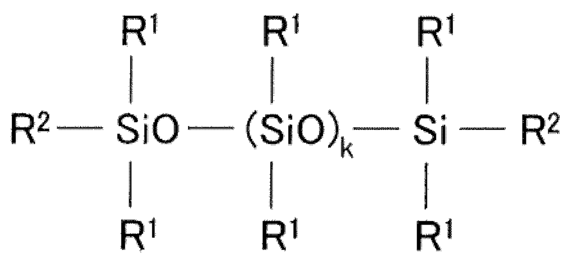

In the formula, $R^1$ represents substituted or unsubstituted monovalent hydrocarbon groups that are the same as or different from each other and have no aliphatic unsaturated bond, $R^2$ represents alkenyl groups, and k represents 0 or a positive integer. The monovalent hydrocarbon group represented by $R^1$ has, e.g., 1 to 10 carbon atoms, and particularly preferably 1 to 6 carbon atoms. Specific examples of the monovalent hydrocarbon group include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups; aralkyl groups such as benzyl, phenylethyl, and phenylpropyl groups, and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups. The alkenyl group represented by $R^2$ has, e.g., 2 to 6 carbon atoms, and particularly preferably 2 to 3 carbon atoms. Specific examples of the alkenyl group include vinyl, allyl, propenyl, isopropenyl, butenyl, isobutenyl, hexenyl, and cyclohexenyl groups. In particular, the vinyl group is preferred In the general formula (1), k is typically 0 or a positive integer satisfying $0 \leq k \leq 10000$, preferably $5 \leq k \leq 2000$, and more preferably $10 \leq k \leq 1200$.

In addition to the organopolysiloxane represented by the above general formula (Chemical Formula 1), the component A1 may also include an organopolysiloxane having three or more, typically 3 to 30, and preferably about 3 to

20, silicon-bonded alkenyl groups per molecule, each alkenyl group having 2 to 8 carbon atoms, and particularly 2 to 6 carbon atoms and being, e.g., a vinyl group or an allyl group. The molecular structure may be a linear, cyclic, branched, or three-dimensional network structure. The organopolysiloxane is preferably a linear organopolysiloxane in which the main chain is composed of repeating diorganosiloxane units, and both ends of the molecular chain are capped with triorganosiloxy groups. The viscosity of the linear organopolysiloxane is 10 to 100,000 mPa·s, and particularly 100 to 10,000 mPa·s at 25°C.

The alkenyl groups may be bonded to any part of the molecule. For example, some alkenyl groups may be bonded to either a silicon atom that is at the end of the molecular chain or a silicon atom that is not at the end (but in the middle) of the molecular chain. In particular, a linear organopolysiloxane represented by the following general formula (Chemical Formula 2) is preferred The linear organopolysiloxane has 1 to 3 alkenyl groups on each of the silicon atoms at both ends of the molecular chain (in this case, if the total number of the alkenyl groups bonded to the silicon atoms at both ends of the molecular chain is less than 3, the organopolysiloxane has at least one alkenyl group bonded to the silicon atom that is not at the end (but in the middle) of the molecular chain, e.g., as a substituent in the diorganosiloxane unit). As described above, the viscosity of the linear organopolysiloxane is preferably 10 to 100,000 mPa·s at 25°C in terms of workability and curability. Moreover, the linear organopolysiloxane may include a small amount of branched structure (trifunctional siloxane units) in the molecular chain.

[Chemical Formula 2]

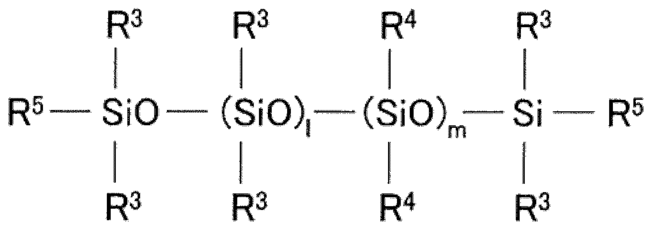

In the formula, $R^3$ represents substituted or unsubstituted monovalent hydrocarbon groups that are the same as or different from each other, and at least one of them is an alkenyl group. $R^4$ represents substituted or unsubstituted monovalent hydrocarbon groups that are the same as or different from each other and have no aliphatic unsaturated bond, $R^5$ represents alkenyl groups, and l and m represent 0 or a positive integer. The monovalent hydrocarbon group represented by $R^3$ has 1 to 10 carbon atoms, and particularly preferably 1 to 6 carbon atoms. Specific examples of the monovalent hydrocarbon group include the following: alkyl groups such as methyl, ethyl, propyl, isopropyl, butyl, isobutyl, tert-butyl, pentyl, neopentyl, hexyl, cyclohexyl, octyl, nonyl, and decyl groups; aryl groups such as phenyl, tolyl, xylyl, and naphthyl groups, aralkyl groups such as benzyl, phenylethyl, and phenylpropyl groups; alkenyl groups such as vinyl, allyl, propenyl, isopropenyl, butenyl, hexenyl, cyclohexenyl, and octenyl groups; and substituted forms of these groups in which some or all hydrogen atoms are substituted by halogen atoms (fluorine, bromine, chlorine, etc.) or cyano groups, including halogen-substituted alkyl groups such as chloromethyl, chloropropyl, bromoethyl, and trifluoropropyl groups and cyanoethyl groups.

The monovalent hydrocarbon group represented by $R^4$ has 1 to 10 carbon atoms, and particularly preferably 1 to 6 carbon atoms. Specific examples of the monovalent hydrocarbon group may be the same as those of $R^1$, but do not include an alkenyl group. The alkenyl group represented by $R^5$ has, e.g., 2 to 6 carbon atoms, and particularly preferably 2 to 3 carbon atoms. Specific examples of the alkenyl group may be the same as those of $R^2$ in the above general formula (Chemical Formula 1), and the vinyl group is preferred.

In the general formula (Chemical Formula 2), l and m are typically 0 or positive integers satisfying $0 < l + m \leq 10000$, preferably $5 \leq l + m \leq 2000$, and more preferably $10 \leq l + m \leq 1200$. Moreover, l and m are integers satisfying $0 \leq l / (l + m) \leq 0.2$, and preferably $0.0011 \leq l / (l + m) \leq 0.1$.

(2) Crosslinking component (component A2)

The component A2 is an organohydrogenpolysiloxane that acts as a crosslinking agent. The addition reaction (hydrosilylation) between SiH groups in the component A2 and alkenyl groups in the component A1 produces a cured product. Any organohydrogenpolysiloxane that has two or more silicon-bonded hydrogen atoms (i.e., Sill groups) per molecule may be used The molecular structure of the organohydrogenpolysiloxane may be a linear, cyclic, branched, or three-dimensional network structure. The number of silicon atoms in a molecule (i.e., the degree of polymerization) may be 2 to 1000, and particularly about 2 to 300.

The locations of the silicon atoms to which the hydrogen atoms are bonded are not particularly limited, and may

be either at the ends or not at the ends (but in the middle) of the molecular chain. The organic groups bonded to the silicon atoms other than the hydrogen atoms may be, e.g., substituted or unsubstituted monovalent hydrocarbon groups that have no aliphatic unsaturated bond, which are the same as those of $R^1$ in the general formula (Chemical Formula 1).

The organohydrogenpolysiloxane of the component A2 may have the following structure.

[Chemical Formula 3]

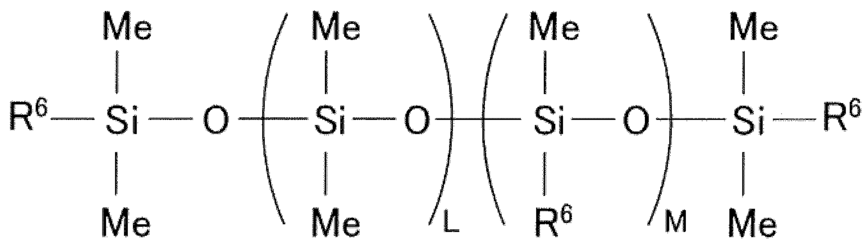

In the formula, $R^6$'s are the same as or different from each other and represent hydrogen, alkyl groups, phenyl groups, epoxy groups, acryloyl groups, methacryloyl groups, or alkoxy groups, and at least two of the $R^6$'s represent hydrogen. L represents an integer of 0 to 1000, and particularly 0 to 300, and M represents an integer of 1 to 200.

(3) Catalyst component (component C)

The catalyst component of the component C accelerates the first stage curing of the composition of the present invention. The component C may be a catalyst used for a hydrosilylation reaction. Examples of the catalyst include platinum group metal catalysts such as platinum-based, palladium-based, and rhodium-based catalysts. The platinum-based catalysts include, e.g., platinum black, platinic chloride, chloroplatinic acid, a reaction product of chloroplatinic acid and monohydric alcohol, a complex of chloroplatinic acid and olefin or vinylsiloxane, and platinum bisacetoacetate. The component C may be added in an amount necessary for curing. The amount of the component C can be appropriately adjusted in accordance with the desired curing rate or the like. The component C is preferably added at 0.01 to 1000 ppm, expressed as weight of metal atoms, with respect to the component A1.

(4) Thermally conductive inorganic filler (component B)

The thermally conductive inorganic filler of the component B is as described above. The alumina is preferably $\alpha$-alumina with a purity of 99.5% or more. The average particle size is D50 (median diameter) in a volume-based cumulative particle size distribution measured by a laser diffraction scattering method The method may use, e.g., a laser diffraction/scattering inorganic filler distribution analyzer LA-950 S2 manufactured by HORIBA, Ltd.

It is preferable that the thermally conductive inorganic filler is surface treated with a silane compound or its partial hydrolysate. The silane compound is expressed by $R_aSi(OR')_{4-a}$, where R represents a substituted or unsubstituted organic group having 1 to 20 carbon atoms, R' represents an alkyl group having 1 to 4 carbon atoms, and a represents 0 or 1. Examples of an alkoxysilane compound (simply referred to as "silane" in the following) expressed by $R_aSi(OR)_{4-a}$ (where R represents a substituted or unsubstituted organic group having 1 to 20 carbon atoms, R' represents an alkyl group having 1 to 4 carbon atoms, and a represents 0 or 1) include the following: methyltrimethoxysilane; ethyltrimethoxysilane; propyltrimethoxysilane; butyltrimethoxysilane; pentyltrimethoxysilane; hexyltrimethoxysilane; hexyltriethoxysilane; octyltrimethoxysilane; octyltriethoxysilane; decyltrimethoxysilane; decyltriethoxysilane; dodecyltrimethoxysilane; dodecyltriethoxysilane; hexadecyltrimethoxysilane; hexaclecyltriethoxysilane; octadecyltrimethoxysilane; and octaclecyltriethoxysilane. These silane compounds may be used alone or in combinations of two or more. The alkoxysilane compound and one-end silanol siloxane may be used together as a surface treatment agent. In this case, the surface treatment may include adsorption in addition to a covalent bond

(5) Other components

The composition of the present invention may include components other than the above as needed. For example, the composition may include an inorganic pigment such as colcothar or alkyltrialkoxysilane used, e.g., for the surface treatment of the filler. An alkoxy group-containing silicone may also be added as a material used, e.g., for the surface treatment of the filler.

Hereinafter, the present invention will be described with reference to the drawings. In the following drawings, the same components are denoted by the same reference numerals. FIG. 1 is a schematic cross-sectional view illustrating a

heat dissipation structure 30 that incorporates thermally conductive sheets in an embodiment of the present invention. A thermally conductive sheet 31b dissipates heat generated by an electronic component 33 such as a semiconductor device. The thermally conductive sheet 31b is fixed to a main surface 32a of a heat spreader 32 facing the electronic component 33, and placed between the electronic component 33 and the heat spreader 32. A thermally conductive sheet 31a is placed between the heat spreader 32 and a heat sink 35. The thermally conductive sheets 31a, 31b and the heat spreader 32 constitute a heat dissipation member that serves to dissipate heat from the electronic component 33. The heat spreader 32 is in the form of, e.g., a rectangular plate and has the main surface 32a facing the electronic component 33 and side walls 32b along the perimeter of the main surface 32a. The thermally conductive sheet 31b is provided on the main surface 32a surrounded by the side walls 32b of the heat spreader 32. The heat sink 35 is provided, via the thermally conductive sheet 31a, on the other surface 32c of the heat spreader 32 that is opposite to the main surface 32a. The electronic component 33 is, e.g., a semiconductor device such as BGA and is mounted on a wiring board 34.

FIG. 2 is a scanning electron microscope (SEM) image (10,000X magnification) of spherical alumina (B1) in an embodiment of the present invention. This spherical alumina is produced by a melting method andis on the market (e.g., "AZ2-75" (trade name) manufactured by NIPPON STEEL Chemical & Material Co., Ltd, average particle size: 2 μm). FIG. 3 is a scanning electron microscope (SEM) image of polygonal or roundish alumina that is not considered to be the spherical alumina (B1) of the present invention.

Examples

Hereinafter, the present invention will be described by way of examples. However, the present invention is not limited to the following examples.

<Compressive load>

The compressive load was measured in accordance with ASTM D575-91: 2012. FIG. 4 is a schematically cross-sectional side view of a compressive load measuring device used in an embodiment of the present invention. In FIG. 4, a compressive load measuring device 1 includes a sample stage 2 and a load cell 6. A thermally conductive sheet sample 4 was held between aluminum plates 3, 5 and mounted as shown in FIG. 4. The thermally conductive sheet sample 4 was compressed by the load cell 6 until the sample reached a predetermined thickness. Then, the maximum load value (instantaneous load value) when the sample was compressed to 50% of its thickness, and the load value (steady-state load value) after maintaining this compression for 1 minute, were recorded

Measurement conditions
Sample: circular shape (with a diameter of 28.6 mm and a thickness of 2 mm)
Compressibility: 50%
Aluminum plate size: circular shape (with a diameter of 28.6 mm) (compression surface)
Compression rate: 5 mm/min
Compression system: TRIGGER system (using the point at which a load of 2N is detected as the measurement start position)
Measuring device: MODEL-1310 NW (load cell 200 kgf) manufactured by Aikoh Engineering Co., Ltd

<Thermal conductivity>

The thermal conductivity of a thermally conductive sheet was measured by a hot disk (in accordance with ISO 22007-2: 2008). As shown in FIG. 5A, using a thermal conductivity measuring device 11, a polyimide film sensor 12 was sandwiched between two thermally conductive sheet samples 13a, 13b, and constant power was applied to the sensor 12 to generate a certain amount of heat. Then, the thermal characteristics were analyzed from the value of the temperature rise of the sensor 12. The sensor 12 has a tip 14 with a diameter of 7 mm. As shown in FIG. 5B, the tip 14 has a double spiral structure of electrodes. Moreover, an electrode 15 for an applied current and an electrode 16 for a resistance value (temperature measurement electrode) are located on the lower portion of the sensor 12. The thermal conductivity was calculated by the following formula (1).

[Formula 1]

$$\lambda = \frac{Po \cdot D(\tau)}{\pi^{3/2} \cdot r} \cdot \frac{D(\tau)}{\Delta T(\tau)}$$

$\lambda$: Thermal conductivity (W/m·K)
$P_0$: Constant power (W)
r: Radius of sensor (m)

$\tau$: $\sqrt{\alpha \cdot t / r^2}$
$\alpha$: Thermal diffusivity of sample ($m^2$/s)
t: Measuring time (s)
D($\tau$): Dimensionless function of $\tau$
$\Delta$T($\tau$): Temperature rise of sensor (K)

<Processability>

The uncured compound was a clay-like solid. Therefore, the processability of the compound was determined based on the moldability of the compound when it was rolled by rotating rolls into a sheet. The evaluation criteria are as follows.

A. The compound has good rolling moldability.
B. The compound is difficult to be rolled, but can be molded
C. The compound cannot be molded by rolling.

<Hardness>

The hardness of the cured sheet was measured in accordance with SHORE 00 specified in ASTM D2240: 2021.

(Example 1)

(1) Matrix resin component

A commercially available two-part room temperature curing silicone polymer was used as a matrix resin component. The two-part room temperature curing silicone polymer was composed of a solution A and a solution B. The solution Apreviously contained a base polymer and a platinum-based metal catalyst. The solution B previously contained a base polymer and a crosslinking component. The commercially available two-part room temperature curing silicone polymer used was an addition-reaction silicone polymer.

(2) Thermally conductive inorganic filler

The amount of a thermally conductive inorganic filler was 1890 g with respect to 100 g of the addition-reaction silicone polymer.
The thermally conductive inorganic filler contained the following particles with respect to 100 g of the addition-reaction silicone polymer:

(i) 290 g of crushed alumina (B2) with an average particle size of 0.4 $\mu$m;
(ii) 330 g of spherical alumina (B1) with an average particle size of 4 $\mu$m;
(iii) 1200 g of spherical alumina (B3) with an average particle size of 75 $\mu$m; and
(iv) 70 g of crushed aluminum nitride (B4) with an average particle size of 14 $\mu$m.

(3) Molding of thermally conductive sheet

The uncured two-part room temperature curing silicone polymer and the thermally conductive inorganic filler were uniformly mixed to form a compound The compound was defoamed under a pressure (reduced pressure) of- 0.1 MPa for 5 minutes. Next, the defoamed compound was sandwiched between two polyester (PET) films and then rolled between two rolls to a thickness of 2 mm. This compound was cured at 100°C for 120 minutes.
Table 1 shows the physical properties of the resulting thermally conductive sheet.

(Examples 2 to 5, Comparative Examples 1 to 6)

Examples 2 to 5 and Comparative Examples 1 to 6 were performed in the same manner as Example 1, except for using the components as shown in Tables 1 and 2. The spherical alumina in Examples 2, 3, 5, and 6 had a shape as

indicated by the photograph in FIG. 2. The roundish alumina in Comparative Examples 7 and 9 had a shape as indicated by the photograph in FIG. 3.

Tables 1 and 2 show the conditions and the results.

[TABLE 1]

| | | Ex.1 | Comp. Ex.1 | Ex. 2 | Comp. Ex.2 | Comp. Ex.3 | Comp. Ex 4 | Comp. Ex.5 | Comp. Ex 6 | Ex. 3 | Ex 4 | Ex. 5 | Comp. Ex 7 | Comp. Ex. 8 |
|---|---|---|---|---|---|---|---|---|---|---|---|---|---|---|
| Addition-reaction silicone polymer (g) | | 100 | 100 | 100 | 100 | 100 | 100 | 100 | 100 | 100 | 100 | 100 | 100 | 100 |
| Alumina | Crushed (B2), 02 μm (g) | - | - | - | - | - | - | - | 290 | - | - | - | - | - |
| | Crushed (B2), 0.4 μm (g) | 290 | 290 | 290 | 290 | 290 | 290 | 290 | - | 400 | 400 | 375 | 290 | - |
| | Crushed, 2 μm (g) | - | 330 | - | - | 330 | 330 | 330 | 330 | - | - | - | - | - |
| | Spherical (B1), 2 μm (g) | - | - | 330 | - | - | - | - | - | 230 | - | 355 | - | 390 |
| | Roundish, 3 μm (g) | - | - | - | - | - | - | - | - | - | - | - | 330 | - |
| | Spherical (B1), 4 μm (g) | 330 | - | - | - | - | - | - | - | - | 230 | - | - | - |
| | Spherical (B3), 10 μm (g) | - | - | - | 330 | - | - | - | - | - | - | - | - | - |
| | Spherical (B3), 35 μm (g) | - | - | - | - | 300 | 600 | 900 | - | - | - | - | - | - |
| | Spherical (B3), 75 μm (g) | 1200 | 1200 | 1200 | 1200 | 900 | 600 | 300 | 1200 | 1200 | 1200 | 1225 | 1200 | 1418 |
| Aluminum nitride | Crushed (B4), 14 μm (g) | 70 | 70 | 70 | 70 | 70 | 70 | 70 | - | 70 | 70 | - | 70 | 82 |
| Total amount of thermally conductive inorganic filler (g) | | 1890 | 1890 | 1890 | 1890 | 1890 | 1890 | 1890 | 1820 | 1900 | 1900 | 1955 | 1890 | 1890 |

(continued)

| | Ex.1 | Comp. Ex.1 | Ex. 2 | Comp. Ex.2 | Comp. Ex.3 | Comp. Ex 4 | Comp. Ex.5 | Comp. Ex 6 | Ex. 3 | Ex 4 | Ex. 5 | Comp. Ex 7 | Comp. Ex. 8 |
|---|---|---|---|---|---|---|---|---|---|---|---|---|---|
| Processability | A | A | A | B | A | A | A | A | A | A | A | A | C |
| Thermal conductivity of cured sheet (W/m·K) | 685 | 6.68 | 681 | 623 | 6.46 | 626 | 6.01 | 6.33 | 7.09 | 722 | 7.07 | 697 | - |
| Hardness (Shore 00) | 41 | 52 | 33 | 55 | 48 | 42 | 44 | 41 | 54 | 52 | 40 | 63 | - |
| 50% compressive load value (instantaneous) (N) | 119 | 786 | 68 | 832 | 644 | 620 | 630 | 393 | 218 | 215 | 215 | 938 | - |
| 50% compressive load value (steady-stake) (N) | 12 | 176 | 7 | 249 | 124 | 108 | 134 | 88 | 39 | 39 | 32 | 142 | - |

[TABLE 2]

| | | Ex.6 | Ex. 7 | Comp. Ex. 9 | Comp. Ex. 10 |
|---|---|---|---|---|---|
| Addtion-reaction silicone polymer (g) | | 100 | 100 | 100 | 100 |
| Alumina | Crushed (B2), 02 μm (g) | - | - | - | - |
| | Crushed (B2), 0.4 μm (g) | 200 | 200 | 200 | 200 |
| | Crushed, 2 μm (g) | - | - | - | 800 |
| | Roundsh, 3 μm (g) | - | - | 800 | - |
| | Spherical (B1), 2 μm (g) | 800 | - | - | - |
| | Spherical (B1), 4 μm (g) | - | 800 | - | - |
| Total amount of alimina (g) | | 1000 | 1000 | 1000 | 1000 |
| Processability | | A | A | A | B |
| Thermal conductivity of cured sheet (W/m·K) | | 2.35 | 2.86 | 2.48 | 2.38 |
| Hardness (Shore 00) | | 66 | 33 | 52 | 53 |
| 50% compressive load value (instantaneous) (N) | | 103 | 152 | 1528 | 3266 |
| 50% compressive load value (steady-state) (N) | | 10 | 12 | 522 | 1164 |

As can be seen from Tables 1 and 2, the thermally conductive sheets of the Examples had a high thermal conductivity, low instantaneous and steady-state load values, and significant compression relaxation. These thermally conductive sheets could be held under a low load while they were gradually compressed. Thus, there was little damage to the holding members. Because of their low load values and flexibility, the thermally conductive sheets had good conformability to the unevenness of electronic components. Further, the thermally conductive sheets had good handleability due to the initial load values. Examples 6 to 7 used only spherical alumina with an average particle size of 1 to 10 μm and crushed alumina with an average particle size of less than 1 μm, and did not use a filler with a large particle size. Nevertheless, the thermally conductive sheets in Examples 6 to 7 had the effects of the present invention as described above.

On the other hand, in Comparative Example 8, instead of using crushed alumina with an average particle size of less than 1 μm, the other fillers were increased to match the total weight of filler so that their proportions remained unchanged Consequently, the fillers would not be appropriately brought together into a coherent whole, leading to poor processability (moldability).

Comparative Example 9 used only roundish alumina with an average particle size of 1 to 10 μm and crushed alumina with an average particle size of less than 1 μm, so that the 50% compressive load values (instantaneous and steady-state) were high. Comparative Example 10 used only crushed alumina with an average particle size of 1 to 10 μm and crushed alumina with an average particle size of less than 1 μm, so that processability was not good and the 50% compressive load values (instantaneous and steady-state) were high.

Industrial Applicability

The thermally conductive sheet of the present invention is useful as a heat dissipating material that is interposed between heat generating members and heat dissipators of, e.g., electronic components such as semiconductor devices, LEDs, and household electrical appliances, information and communication modules including optical communication equipment, and components mounted on vehicles.

Description of Reference Numerals

1 Compressive load measuring device
2 Sample stage
3, 5 Aluminum plate
4 Thermally conductive sheet sample
6 Load cell
11 Thermal conductivity measuring device

12 Sensor
13a, 13b Thermally conductive sheet sample
14 Tip of the sensor
15 Electrode for applied current
16 Electrode for resistance value (temperature measurement electrode)
30 Heat dissipation structure
31a, 31b Thermally conductive sheet
32 Heat spreader
32b Side wall of the heat spreader
33 Electronic component
34 Wiring board
35 Heat sink

## Claims

**1.** A thermally conductive composition comprising:

a curable polyorganosiloxane (A); and
a thermally conductive inorganic filler (B),
wherein an amount of the thermally conductive inorganic filler (B) is 500 to 5000 parts by mass with respect to 100 parts by mass of the curable polyorganosiloxane (A),
the thermally conductive inorganic filler (B) contains spherical alumina (B1) with an average particle size of 1 μm or more andless than 10 μm and crushed alumina (B2) with an average particle size of 0.01 μm or more andless than 1 μm, and
a proportion of the spherical alumina (B1) is more than 0 part by mass and 1500 parts by mass or less and a proportion of the crushed alumina (B2) is more than 0 part by mass and 1000 parts by mass or less with respect to 100 parts by mass of the curable polyorganosiloxane (A).

**2.** The thermally conductive composition according to claim 1, wherein the thermally conductive inorganic filler (B) further contains spherical alumina (B3) with an average particle size of 10 μm or more and 150 μm or less in a proportion of more than 0 part by mass and 3500 parts by mass or less.

**3.** The thermally conductive composition according to claim 1 or 2, wherein the thermally conductive inorganic filler (B) further contains crushed aluminum nitride (B4) with an average particle size of 10 μm or more and 100 μm or less in a proportion of more than 0 part by mass and 500 parts by mass or less.

**4.** The thermally conductive composition according to claim 3, wherein the proportion of the crushed alumina (B2) is more than 0 part by mass and 800 parts by mass or less, the proportion of the spherical alumina (B3) is more than 0 part by mass and 3000 parts by mass or less, and the proportion of the crushed aluminum nitride (B4) is more than 0 part by mass and 300 parts by mass or less with respect to 100 parts by mass of the curable polyorganosiloxane (A).

**5.** The thermally conductive composition according to any one of claims 1 to 4, wherein the thermally conductive inorganic filler is surface treated with a silane compound, a titanate compound, an aluminate compound, or partial hydrolysates thereof

**6.** A thermally conductive sheet comprising the thermally conductive composition according to any one of claims 1 to 5, the thermally conductive composition having been molded into a sheet and cured

**7.** The thermally conductive sheet according to claim 6, having an instantaneous load value of 300 N or less when the thermally conductive sheet with a diameter of 28.6 mm and an initial thickness of 2 mm is compressed by 50%, which is determined by a compressive load measuring method in accordance with ASTMD575-91: 2012.

**8.** The thermally conductive sheet according to claim 6 or 7, having a steady-state load value of 80 N or less when the thermally conductive sheet with a diameter of 28.6 mm and an initial thickness of 2 mm is compressed by 50%, which is determined by a compressive load measuring method in accordance with ASTMD575-91: 2012.

**9.** A method for producing the thermally conductive sheet according to any one of claims 6 to 8, comprising:

molding a compound of the thermally conductive composition according to any one of claims 1 to 5 into a sheet, and
heating and curing the sheet-shaped compound

**10.** The method according to claim 9, wherein the heating and curing of the sheet-shaped compound is performed at 90 to 120°C for 5 to 180 minutes.

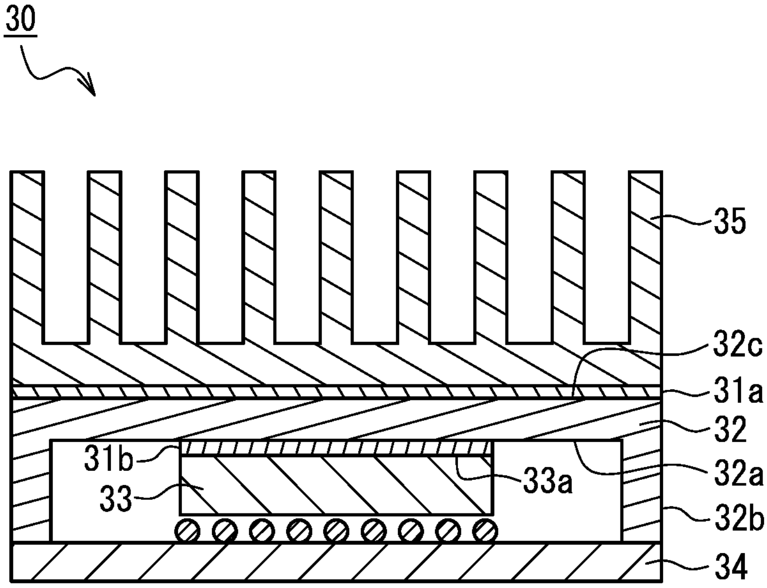


FIG. 1

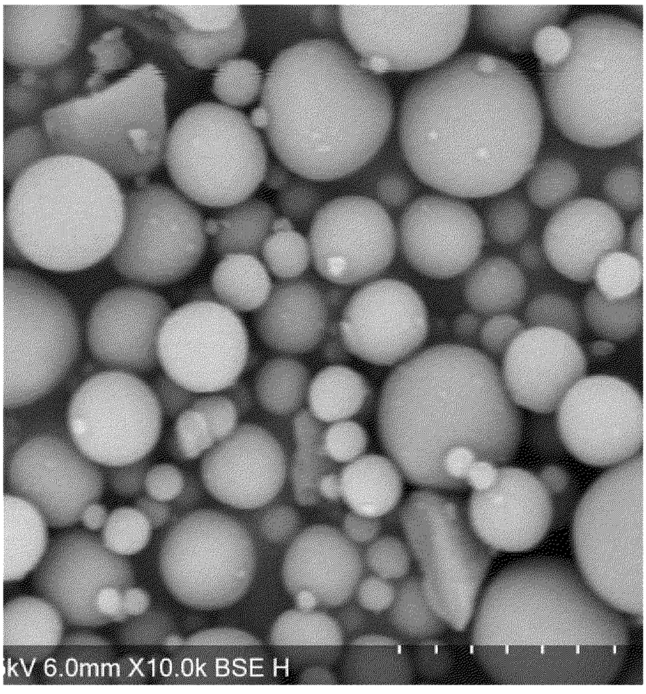


FIG. 2

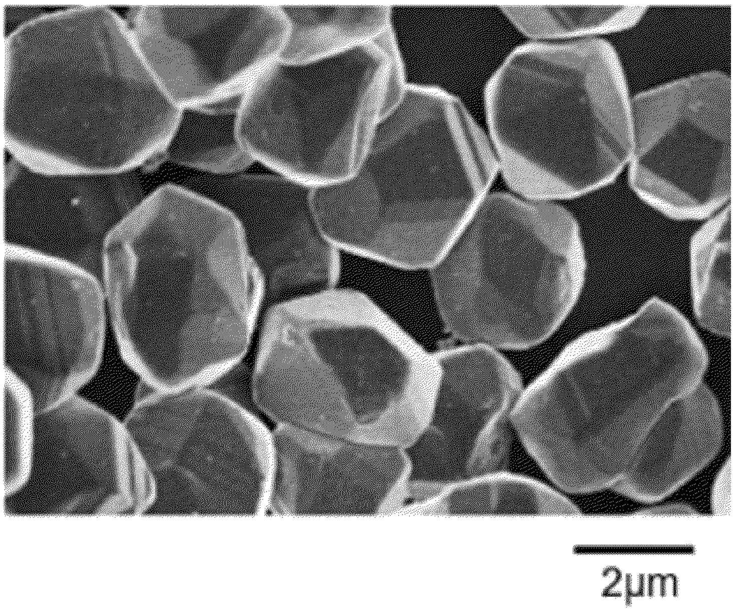


FIG. 3

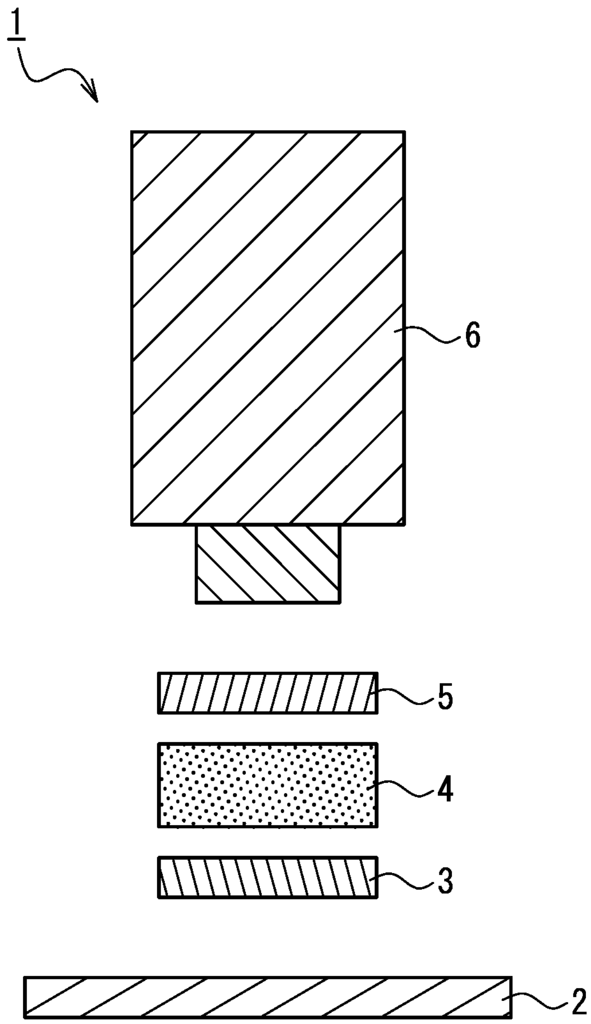


FIG. 4

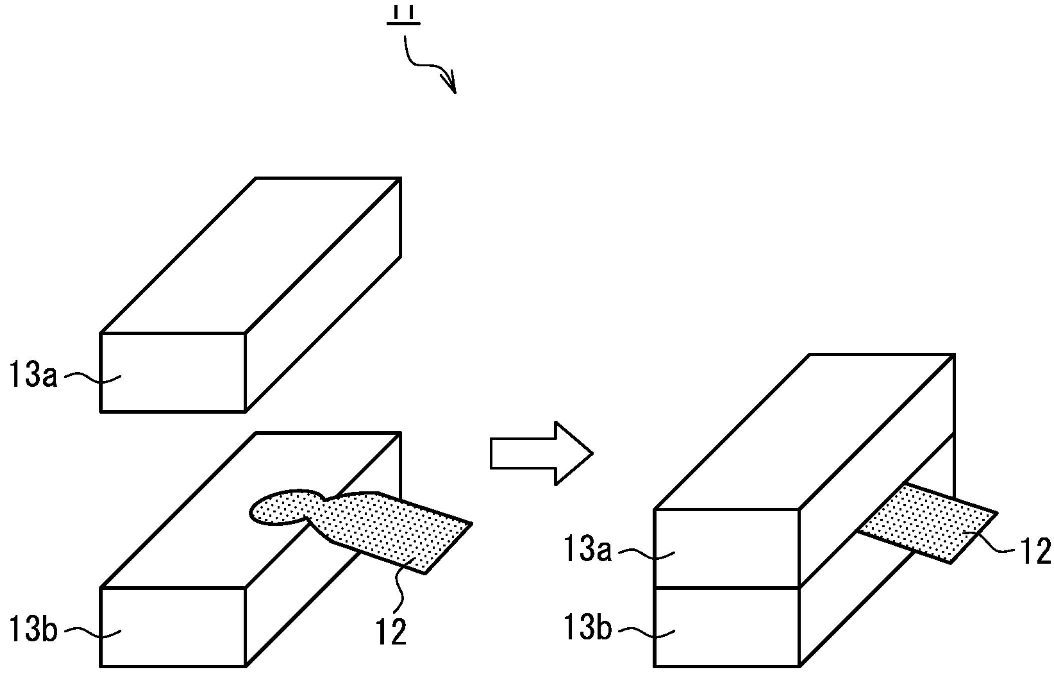


FIG. 5A

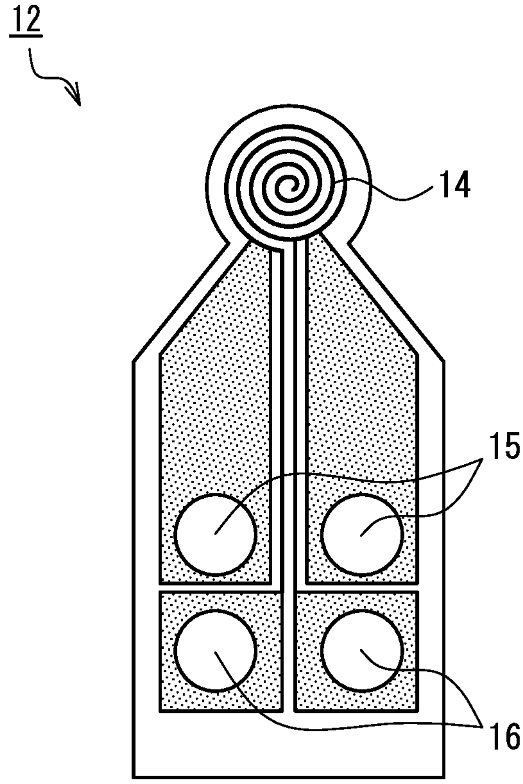


FIG. 5B

**INTERNATIONAL SEARCH REPORT**

International application No. **PCT/JP2022/037639**

**A. CLASSIFICATION OF SUBJECT MATTER**

***C08L 83/07***(2006.01)i; ***C08J 5/18***(2006.01)i; ***C08K 3/22***(2006.01)i; ***C08K 3/28***(2006.01)i; ***C08K 9/04***(2006.01)i; ***C08L 83/05***(2006.01)i

FI: C08L83/07; C08L83/05; C08K3/22; C08K3/28; C08K9/04; C08J5/18 CFH

According to International Patent Classification (IPC) or to both national classification and IPC

**B. FIELDS SEARCHED**

Minimum documentation searched (classification system followed by classification symbols)

C08L83/00-83/16; C08J5/18; C08K3/00-13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2018/190233 A1 (DENKA CO LTD) 18 October 2018 (2018-10-18)<br>claims, paragraphs [0057]-[0061], examples (tables 1-4) | 1, 2, 6-10<br>3-5 |
| X<br>Y | WO 2018/131486 A1 (DENKA CO LTD) 19 July 2018 (2018-07-19)<br>claims, paragraph [0055], example 22 | 1, 2, 5-10<br>3, 4 |
| X<br>Y | WO 2020/179115 A1 (FUJI POLYMER IND) 10 September 2020 (2020-09-10)<br>claims, paragraphs [0033]-[0035], examples | 1, 2, 5-10<br>3-5 |
| Y | JP 6246986 B1 (MOMENTIVE PERFORMANCE MATERIALS JAPAN LLC) 13 December 2017 (2017-12-13)<br>claims | 3, 4 |
| Y | JP 2017-210518 A (SHINETSU CHEMICAL CO) 30 November 2017 (2017-11-30)<br>claims, paragraphs [0067]-[0069] | 3-5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 November 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/037639

C. DOCUMENTS CONSIDERED TO BE RELEVANT

| Category* | Citation of document, with indication, where appropriate, of the relevant passages | Relevant to claim No. |
|---|---|---|
| A | JP 2013-147600 A (SHINETSU CHEMICAL CO) 01 August 2013 (2013-08-01) claims, paragraph [0018] | 1-10 |
| A | JP 2010-168558 A (SHIN KOBE ELECTRIC MACH CO LTD) 05 August 2010 (2010-08-05) claims | 1-10 |

Form PCT/ISA/210 (second sheet) (January 2015)

**INTERNATIONAL SEARCH REPORT**
**Information on patent family members**

International application No.
**PCT/JP2022/037639**

| Patent document cited in search report | Publication date (day/month/year) | Patent family member(s) | Publication date (day/month/year) |
|---|---|---|---|
| WO 2018/190233 A1 | 18 October 2018 | CN 110383963 A | |
| WO 2018/131486 A1 | 19 July 2018 | TW 201831602 A | |
| WO 2020/179115 A1 | 10 September 2020 | US 2021/0214600 A1<br>claims, paragraphs [0047]-[0050], examples<br>CN 111919292 A<br>KR 10-2021-0136826 A | |
| JP 6246986 B1 | 13 December 2017 | US 2021/0147681 A1<br>claims<br>WO 2018/016566 A1<br>CN 109415564 A<br>KR 10-2019-0034575 A | |
| JP 2017-210518 A | 30 November 2017 | US 2019/0292349 A1<br>claims, paragraphs [0117]-[0118]<br>WO 2017/203924 A1<br>CN 109312159 A<br>KR 10-2019-0011743 A | |
| JP 2013-147600 A | 01 August 2013 | CN 103214853 A | |
| JP 2010-168558 A | 05 August 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013147600 A
- JP 2003253136 A
- JP 2001217360 A
- WO 2020179115 A1